# EUROPEAN PATENT SPECIFICATION

(11) **EP 1 241 026 B1**
(45) Date of publication and mention of the grant of the patent: **07.03.2007**
(21) Application number: 02251699.1
(22) Date of filing: 11.03.2002
(51) Int. Cl.: B60C 11/04, B60C 11/13, B29C 47/04, B29C 47/56

(54) **Tire**
Reifen
Bandage pneumatique

(30) Priority: 12.03.2001 JP 2001069480; 13.03.2001 JP 2001070739; 31.01.2002 JP 2002022766
(43) Date of publication of application: 18.09.2002
(60) Divisional application: 06026158.3
(73) Proprietor: Bridgestone Corporation, Tokyo 104-0031 (JP)
(72) Inventor: Shimada, Go, c/o Bridgestone Corporation, Tokyo 104-0031 (JP); Irimiya, Kenichiro, c/o Bridgestone Corporation, Tokyo 104-0031 (JP); Yamane, Eiichiro, c/o Bridgestone Corporation, Tokyo 104-0031 (JP)
(74) Representative: Whalley, Kevin

(56) References cited:
- EP-A- 0 908 330
- WO-A-00/53437
- DE-B- 1 194 721

## Description

The present invention relates to a tire, and more specifically a tire used for heavy-load vehicles such as trucks, construction vehicles, and the like. In particular, the present invention relates to a tire in which thin grooves which extend along the circumferential direction (so-called defense grooves) are provided in vicinities of the shoulder portions of the tread in order to improve partial wear resistance.

In pneumatic tires for vehicles (those for heavy-load vehicles such as trucks or the like, especially) at which suppression of wear is particularly required, grooves formed in the circumferential direction, which are relatively narrow (i.e., having widths of about 1 to 4 mm) and which are often called defense grooves, are provided to improve partial wear resistance of the tread rubber so that partial wear which arises in vicinities of the shoulder portions does not progress or grow toward the tire equatorial plane.

Because these defense grooves are formed at portions which are relatively near the shoulder portions, the rigidity of the land portions at the outer sides at the defense groove in the widthwise direction of the tire is relatively small as compared with the rigidity of other land portions.

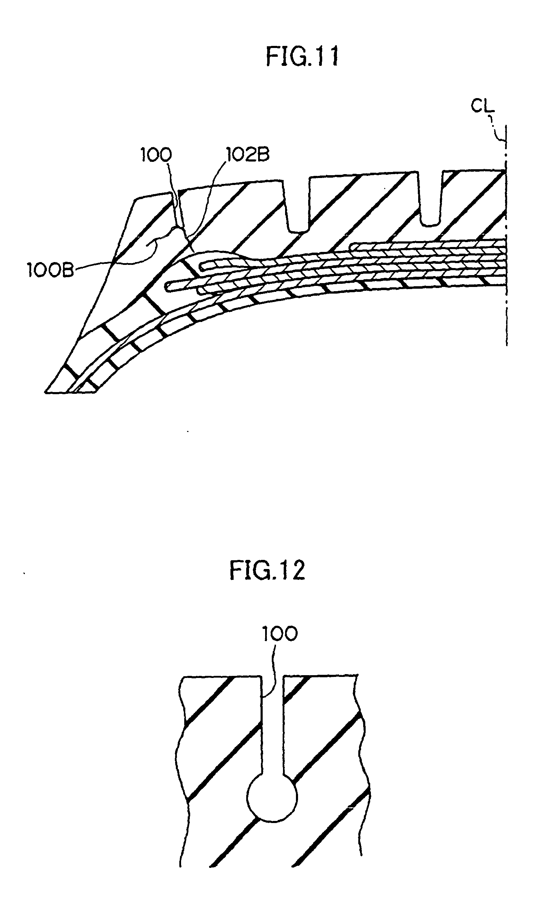

The defense groove as a narrow groove must have a relatively small radius of curvature of the bottom portion thereof (about 1 to 3 mm). As a result, as shown in Fig. 11 of one accompanying drawings, a problem arises in that, due to the rubber deterioration and the like due to traveling, cracks 102A, B and the like may be relatively easily generated in the bottom portion of a defense groove 100 provided in the tread.

There are cases in which, when the crack 102A grows or advances toward the shoulder portion side, the rib portion at the outer side of the defense groove 100 breaks off. When the crack 102B grows or advances toward the belt layer side, there may be cases in which the tread and the belt are separated, resulting in the tire bursting.

In order to overcome the aforementioned problems, a tire has been conceived of in which the tread rubber is improved, and, as shown in Fig. 12, the vicinity of the groove bottom of the defense groove 100 is formed to have a substantially circular cross-section.

However, when the tread rubber is improved and the resistance to tearing and cracking is improved, the partial wear resistance inevitably deteriorates, and the improvement in partial wear resistance due to the defense grooves cannot be exhibited to the fullest extent.

Further, in order to reduce tire noise, pneumatic tires have been proposed in which shields (groove fences) are provided within grooves formed in the circumferential direction as disclosed in Japanese Patent Application Laid-Open (JP-A) Nos. 10-250317, 11-105511, and the like (grooves provided in the circumferential direction will be referred to as "circumferential direction grooves" hereinafter).

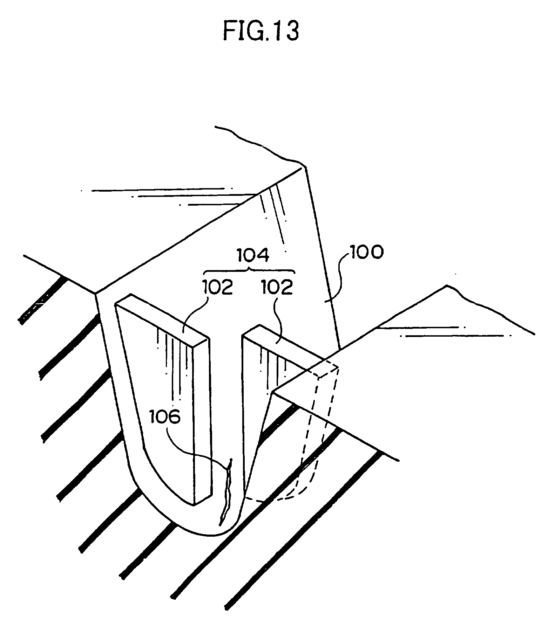

As shown in Fig. 13, when a groove fence 104, which is formed from a pair of projections 102, is provided within a circumferential direction main groove 100, a concentration of shearing stress arises at the bottom portion of the groove bottom between the respective projections 102, due to the dynamic strain (strain which enlarges and reduces the groove width) at the time the tire rolling, whereby a problem arises in that a crack 106 forms.

Attention is also drawn to the disclosures of EP-A-0 908 330, WO-A-0 053 437 and DE-A-11 94 721.

In view of the aforementioned, an object of the present invention is to provide a tire which is applied to vehicles for heavy loads, in which tire the generation of cracks from the groove bottoms of circumferential direction grooves is suppressed and the growth of cracks which have been generated is suppressed.

The present invention provides a tire comprising:
a tread; and
a plurality of grooves provided in the tread; characterized in that:
   at at least one groove of the plurality of grooves, a crack suppressing rubber having crack resistance which is superior to crack resistance of surrounding rubber is disposed so as to reinforce a vicinity of a groove bottom, the crack resistance being a characteristic of suppressing generation and growth of cracks and is evaluated by elongation-at-break (%) of rubber as stated in the JIS standard vulcanized rubber tensile test method (K6251), and elongation-at-break of the crack suppressing rubber is 130 % or more of elongation-at-break of a rubber forming a tread surface of the tread.

Next, operation of the tire of the invention will be described.

In the tire of one invention, the crack suppressing rubber, which has crack resistance which is superior to that of the surrounding rubber (the surrounding rubber being the rubber forming the main portion of the tread), is disposed so as to reinforce a vicinity of the groove bottom of the groove. Accordingly, the generation of cracks from a vicinity of the groove bottom, at a time when land portions at the side of the groove are greatly deformed due to a large lateral force or to recesses and projections on the road surface or the like, can be suppressed, and thus the advance or growth of generated cracks can be suppressed.

As a result, breaking off of the land portions due to the advancing of cracks, and tread separation can be suppressed.

Since an ordinary tread rubber can be used at the main portions of the tread, there occurs no deterioration in the other performances such as partial wear resistance or the like.

The groove of the tire of the invention is preferably a circumferential groove which extends in a circumferential direction and which is disposed at an outermost side in a widthwise direction of the tire.

In such a tire based, the crack suppressing rubber, which has crack resistance which is superior to that of the surrounding rubber (the surrounding rubber being the rubber forming the main portion of the tread), is disposed so as to reinforce a vicinity of the groove bottom of the circumferential groove at the outermost side in the widthwise direction of the tire. Accordingly, the generation of cracks from a vicinity of the groove bottom at a time when the land portions, which are disposed at the outer side of the circumferential groove at the outermost side in the widthwise direction of the tire, are greatly deformed due to a large lateral force or due to recesses and projections on the road surface or the like, can be suppressed. As a result, the advance or growth of generated cracks can be suppressed.

Accordingly, breaking off of the land portions at the outermost side in the widthwise direction of the tire due to the growth of cracks, as well as tread separation, can be suppressed.

The elongation-at-break of the crack suppressing rubber is 130% or more of the elongation-at-break of the rubber which forms the tread surface of the tread, whereby the generation of cracks can be reliably suppressed.

Here, elongation-at-break means the elongation-at-break (%) as stated in the JIS standard vulcanized rubber tensile test method (K6251).

Note that, when the tread has a cap-base structure, the rubber forming the tread surface of the tread is the cap rubber.

The crack suppressing rubber of the tire is preferably provided at 10% or more of a groove depth dimension, at least from the groove bottom toward an opening portion of the groove.

Cracks often progress or grow from the groove bottom (the deepest portion) where stress is likely to concentrate. However, there are cases in which cracks, which are generated slightly above the groove bottom (the deepest portion), start to grow.

Accordingly, in order to suppress the progression (growth) of cracks which are generated from slightly above the groove bottom (the deepest portion), the crack suppressing rubber is preferably provided over a range of 10% or more of the groove depth dimension, at least from the groove bottom toward the groove opening portion.

Note that the crack suppressing rubber may be provided so as to reinforce the entire circumferential direction groove from the groove bottom to the groove opening portion.

A thickness of the crack suppressing rubber of the tire is preferably 1 mm or more.

If the thickness of the crack suppressing rubber is too thin, the progression or growth of cracks cannot be suppressed. Thus, the thickness of the crack suppressing rubber is preferably 1 mm or more.

The thickness of the crack suppressing rubber of the tire is more preferably greater than or equal to 2 mm and less than or equal to 5 mm.

When the thickness of the crack suppressing rubber is greater than or equal to 2 mm, the crack suppressing effect is further improved.

A thickness of the crack suppressing rubber exceeding 5 mm is not preferable because the balance with the other properties, such as the heat generation property, deteriorates.

In a preferred aspect of the present invention, the tire further comprises a projection which extends from at least one of the groove bottom and a groove wall of the groove toward an inner side of the groove, an end portion of the projection being disposed in the vicinity of the groove bottom.

Next, operation of the tire based on the preferred aspect will be described.

The grooves formed in the tread tend to cause columnar resonance due to rolling of the tire. Therefore, the noise generated by the tire may become worse as a result of the provision of the grooves. However, by providing projections in the grooves, the columnar resonance can be significantly reduced.

In cases in which projections extend from opposing groove walls and the two projections are close to one another, for example, stress is likely to concentrate at the groove bottom between the projections.

However, because the crack suppressing rubber, which has excellent crack resistance, is disposed in the vicinity of the groove bottom, generation of cracks due to a concentration of stress can be reliably prevented.

The invention will be further described with reference to one accompanying drawings, wherein
Fig. 1 is a cross-sectional view of a tread of a pneumatic tire relating to a first embodiment.
Fig. 2 is a plan view of the tread of the pneumatic tire relating to the first embodiment.
Fig. 3 is a cross-sectional view of a mold and a green tire.
Fig. 4 is a cross-sectional view of a mold and a green tire relating to a modified embodiment.
Fig. 5 is a cross-sectional view of a tread of a pneumatic tire relating to the embodiment of Fig. 4.
Fig. 6 is a plan view of a tread of a pneumatic tire relating to a second embodiment.
Fig. 7 is a perspective view of a circumferential direction main groove of the pneumatic tire relating to the second embodiment.
Fig. 8 is a cross-sectional view of a tread of a pneumatic tire relating to a modified embodiment.
Fig. 9 is a cross-sectional view of a tread of a pneumatic tire relating to yet another modified embodiment.
Fig. 10 is a cross-sectional view of a tread of a pneumatic tire relating to still yet another modified embodiment.
Fig. 11 is a cross-sectional view of a pneumatic tire relating to a conventional example.
Fig. 12 is a cross-sectional view of a tread of a pneumatic tire relating to a conventional example.
Fig. 13 is a perspective view of a circumferential direction main groove of a pneumatic tire relating to a conventional example.
Fig. 14 is a perspective view in which a flow path forming mold and a mouthpiece of a device for extruding an unvulcanized tread rubber for a tire, are viewed from beneath at an upstream side.
Fig. 15 is a schematic view showing a schematic structure of the device for extruding an unvulcanized tread rubber for a tire.
Fig. 16 is a cross-sectional view, taken along line 3-3, of the flow path forming mold and the mouthpiece shown in Fig. 14.
Fig. 17 is a cross-sectional view, taken along line 4-4, of the flow path forming mold and the mouthpiece shown in Fig. 14.
Fig. 18A is a plan view of a branched flow path forming mold, and Fig. 18B is a side view of the branched flow path forming mold shown in Fig. 18A.
Fig. 19 is a cross-sectional view, taken along line 6-6, of the branched flow path forming mold shown in Fig. 18A.
Fig. 20 is a cross-sectional view of an integral composite unvulcanized tread rubber which is extrusion molded by using the device for extruding an unvulcanized tread rubber for a tire of the first embodiment of the present invention.
Fig. 21 is a cross-sectional view of an integral composite unvulcanized tread rubber which is extrusion molded by using a device for extruding an unvulcanized tread rubber for a tire of a second embodiment of the present invention.

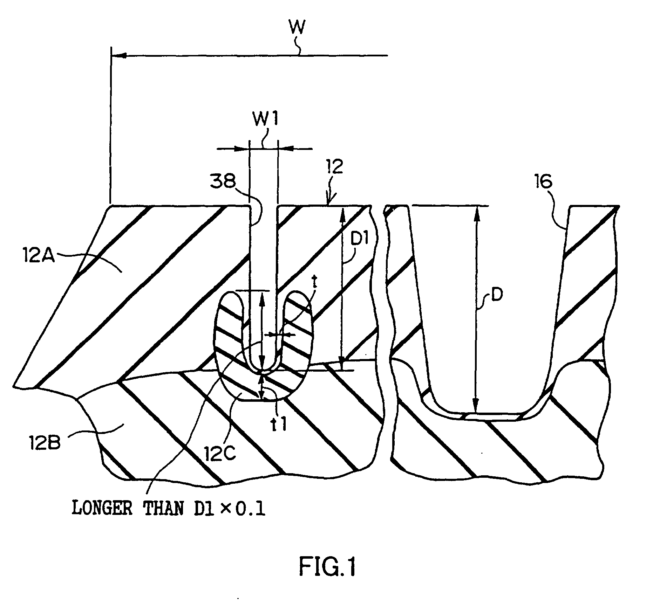

A first embodiment of a pneumatic tire of the present invention will be described in accordance with Figs. 1 through 5.

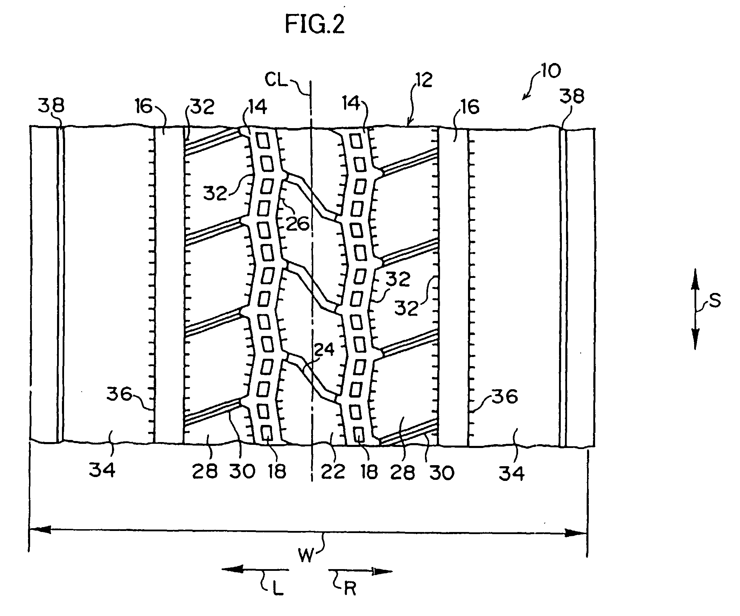

As shown in Fig. 2, circumferential direction main grooves 14 are formed in a tread 12 (having a tread width W) of a pneumatic tire 10 of the present embodiment, along a circumferential direction of the tire (the direction of arrow S), at both sides in the widthwise direction (i.e. the direction of arrow L and the direction of arrow R) of a tire equatorial plane CL. Circumferential direction main grooves 16, which extend linearly along the circumferential direction of the tire, are formed at the outer sides, in the widthwise direction of the tire, of the circumferential direction main grooves 14.

A plurality of stone-catching preventing projections 18 are formed along the longitudinal directions of the grooves, at the bottom portions of the circumferential direction grooves 14. The position of the peak portion of the stone-catching preventing projection 18 is set to be lower than the tread surface of the tread 12.

Lateral grooves 24, which are inclined with respect to the axial direction of the tire, are formed in the circumferential direction of the tire at a center rib 22 which is located between the pair of circumferential direction main grooves 14.

A plurality of short sipes 26, which extend in the axial direction of the tire, are formed in the circumferential direction of the tire at the tread surface side edge portions of the center rib 22, which edge portions are at the circumferential direction main groove 14 sides.

A plurality of lateral grooves 30 having sipes, which are inclined with respect to the axial direction of the tire, are formed in the circumferential direction of the tire in second ribs 28 which are located between the circumferential direction main grooves 14 and the circumferential direction main grooves 16.

A plurality of short sipes 32, which extend in the axial direction of the tire, are formed, in the circumferential direction of the tire, at the tread surface side edge portions of the second rib 28, which edge portions include those at the circumferential direction main groove 14 side and those at the circumferential direction main groove 16 side.

Further, a plurality of short sipes 36, which extend in the axial direction of the tire, are formed in the circumferential direction of the tire, at the tread surface side edge portion of a shoulder rib 34, which edge portion is at the circumferential direction main groove 16 side.

As shown in Fig. 1, a circumferential direction narrow groove 38, which extends linearly along the circumferential direction near the shoulder portion and which is narrower than the circumferential direction main groove 16, is formed in the shoulder rib 34.

A groove width W1 of the circumferential direction narrow groove 38 is a groove width which is 3% or less than the tread width W, so that a sudden change in ground-contact pressure in the shoulder rib 34 does not arise. Preferably, the groove width W1 is about 0.3 to 2% of the tread width W so that the groove walls substantially contact one another at the ground-contact region at the time when the tire is rolling while loaded.

Further, in order to obtain the effect of preventing partial wear, a groove depth D1 must be 30% or more of a depth D of the adjacent circumferential direction main groove 16, and preferably is less than or equal to 100% of the depth D.

The tread 12 of the present embodiment has a so-called cap-base structure formed from a cap rubber 12A which is at the tread surface side, and a base rubber 12B which is disposed at the inner side of the cap rubber 12A in the radial direction of the tire.

The types of rubbers of the cap rubber 12A and base rubber 12B are as in conventional art. For the cap rubber 12A, the rubber is selected mainly in consideration of the partial wear resistance, and for the base rubber 12B, the rubber is selected in consideration of heat build-up durability.

In the present embodiment, a vicinity of the groove bottom of the circumferential direction narrow groove 38 is reinforced by a crack suppressing rubber 12C which is for suppressing the generation and the growth of cracks.

The crack suppressing rubber 12C is a rubber whose elongation-at-break is greater than that of the cap rubber 12A.

Here, the crack suppressing rubber 12C is preferably provided over a range which is 10% or more of the groove depth D1, from the groove bottom (the deepest portion) of the circumferential direction narrow groove 38 toward the opening portion of the groove.

Moreover, in order to obtain a sufficient crack suppressing effect, a thickness t1 of the crack suppressing rubber 12C is preferably 1 mm or more in the vicinity of the groove bottom (at least at the inner side, in the radial direction of the tire, of the groove bottom, and at the tire widthwise direction sides of the groove bottom). Note that the thickness t1 of the crack suppressing rubber 12C is more preferably greater than or equal to 2 mm and less than or equal to 5 mm.

A thickness t1 of the crack suppressing rubber 12C exceeding 5 mm is not preferable because the balance with the other properties, such as the heat generation property, deteriorates.

The elongation-at-break of the crack suppressing rubber 12C is 130% or more of that of the cap rubber 12A forming the tread surface of the tread 12.

The crack suppressing rubber 12 is preferably exposed at the groove walls in the vicinity of the groove bottom of the circumferential direction narrow groove 38. However, the cap rubber 12A may be provided at the groove wall sides of the crack suppressing rubber 12C provided that the cap rubber 12A is thin there.

In the present embodiment, the cap rubber 12A is disposed in the form of a thin film at the groove wall sides of the crack suppressing rubber 12C. In this way, in cases in which the crack suppressing rubber 12C is not exposed at the groove walls, a thickness t of the thin-film-form cap rubber 12A which reinforces the crack suppressing rubber 12C at the groove wall sides must be 1 mm or less, and is preferably 0.5 mm or less.

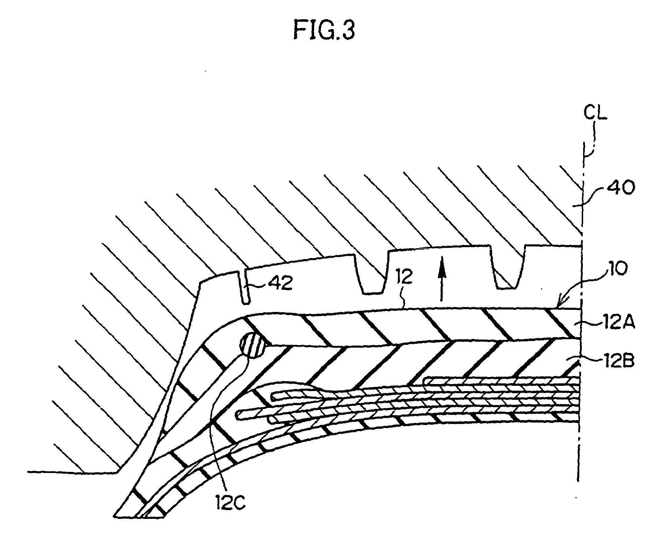

Here, in the present embodiment, the reason why the cap rubber 12A is disposed at the groove wall sides of the crack suppressing rubber 12C is that the unvulcanized tread 12, which has the cross-sectional configuration shown in Fig. 3, is used.

As shown in Fig. 3, at the unvulcanized tread 12 of a green tire, the lower side is the unvulcanized base rubber 12, the upper side is the unvulcanized cap rubber 12A, and the rubber, which has a substantially circular cross-section which is disposed between the unvulcanized base rubber 12B and cap rubber 12A in the vicinity of the end portion, is the unvulcanized crack suppressing rubber 12C.

When a green tire to which this unvulcanized tread 12 is adhered is vulcanization molded, as shown in Fig. 3, a rib portion (a rib-shaped projection which forms a groove in the tread of the tire) 42 of a mold 40 is pushed to abut the cap rubber 12A above (in Fig. 3) the crack suppressing rubber 12C. As a result, in the cross-sectionalconfiguration after molding, as shown in Fig. 1, the cap rubber 12A remains in a thin-film-form at the groove wall sides of the crack suppressing rubber 12C.

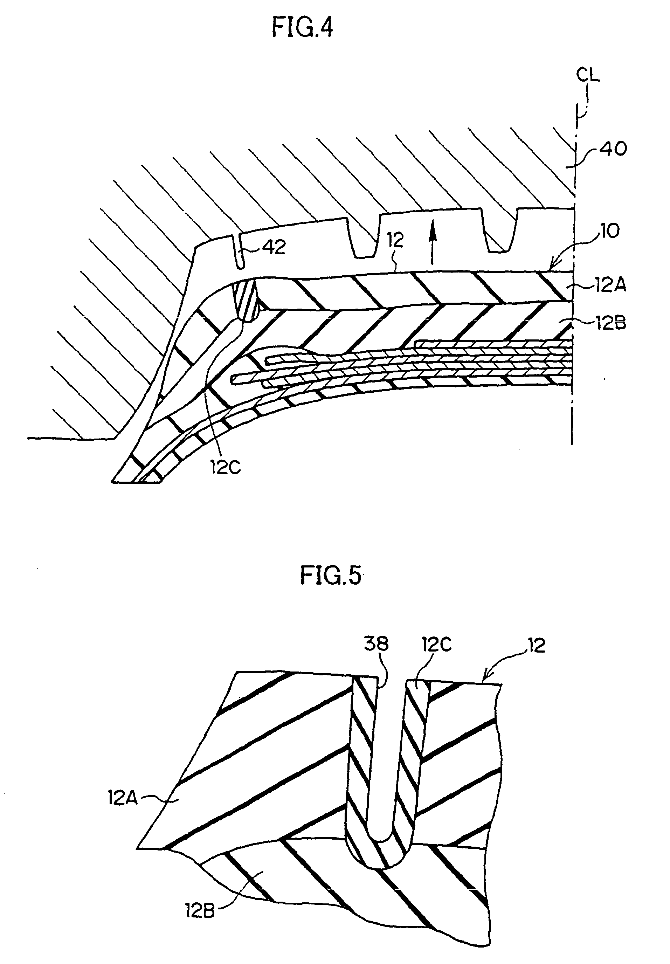

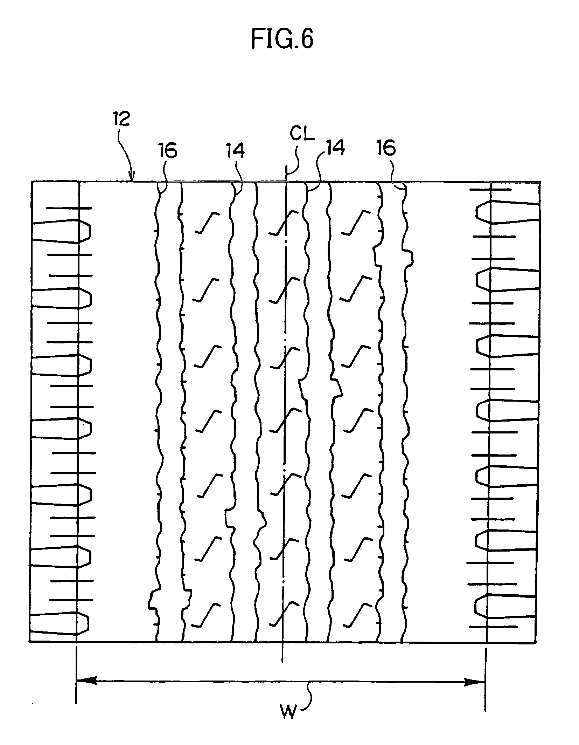

If the crack suppressing rubber 12C is provided so as to reach the surface of the cap rubber 12A as shown in Fig. 4, a tire in which only the crack suppressing rubber 12C is exposed at the entire groove wall can be molded as shown in Fig. 5.

The internal structure, other than the tread 12, of the pneumatic tire 10 of the present embodiment is the same as that of an ordinary radial tire for heavy loading.

Next, operation of the present embodiment will be described.

When a lateral force acts on the pneumatic tire 10, the circumferential direction narrow grooves 38 appropriately reduce the ground-contact pressure applied to the shoulder ribs 34, and make the ground-contact pressure distribution of the shoulder ribs 34 more uniform. As a result, generation of local wear, which is a main type of partial wear, is suppressed, and the growth or advance of generated local wear toward the inner sides in the axial direction of the tire, of the shoulder ribs 34 (i.e., toward the tire equatorial plane CL sides of the shoulder ribs 34) is suppressed.

Further, the crack suppressing rubbers 12C, which have elongation-at-break which is superior to that of the cap rubber 12A, are disposed so as to reinforce vicinities of the groove bottoms of the circumferential direction narrow grooves 38. Thus, the generation of cracks from vicinities of the groove bottoms, at the time when the land portions at the outer sides of the circumferential direction narrow grooves 38 deform greatly due to great lateral force or due to recesses and projections at the road surface or the like, can be suppressed, and the growth of cracks which have been generated can be suppressed. As a result, breaking-off of the land portions at the outer sides of the circumferential direction narrow grooves 38, and separation of the tread 12 can be suppressed.

There are cases in which cracks, which are generated slightly above the groove bottom (the deepest portion) grow. However, growth of such cracks can be suppressed by providing the crack suppressing rubber 12C over a range of 10% or more of the groove depth dimension D of the circumferential direction groove 38 from the groove bottom toward the opening portion of the groove due to the use of the crack suppressing rubber.

Further, because a small amount of the crack suppressing rubber 12C is used in only a vicinity of the bottom portion of the circumferential direction narrow groove 38, the basic performances of the tread 12 do not deteriorate.

Moreover, as shown in Fig. 5, if the crack suppressing rubber 12C is provided from the groove bottom to the groove opening portion of the circumferential direction narrow groove 38, the generation of cracks can be suppressed over the entire groove.

If the break-at-elongation of the crack suppressing rubber 12C is less than 130% of that of the cap rubber 12A, the effects of suppressing generation of cracks and growth of cracks are insufficient.

In the present embodiment, the structure of the tread 12 is a cap-base structure. However, the tread 12 may be structured by a single rubber, or may be formed by three or more types of rubber.

Further, the cross-sectional configuration of the circumferential direction narrow groove 38 may be flask-shaped as shown in Fig. 12.

In the present embodiment, the crack suppressing rubber 12C is disposed in the vicinity of the groove bottom of the circumferential direction narrow groove 38. However, the crack suppressing rubber 12C may be provided at any type of groove at which cracks are relatively easily generated in the vicinity of the groove bottom and the generated cracks relatively easily grow larger.

A second embodiment of the pneumatic tire of the present invention will be described in accordance with Fig. 6. Note that structures which are the same as those of the first embodiment are denoted by the same reference numerals, and description thereof is omitted.

As shown in Fig. 6, the circumferential direction main grooves 14 and the circumferential direction main grooves 16 are formed in the tread 12 (having the tread width W) of the pneumatic tire 10 of the present embodiment.

Note that stone-catching preventing projections are not provided at the bottom portions of the circumferential direction main grooves 14 of the present embodiment.

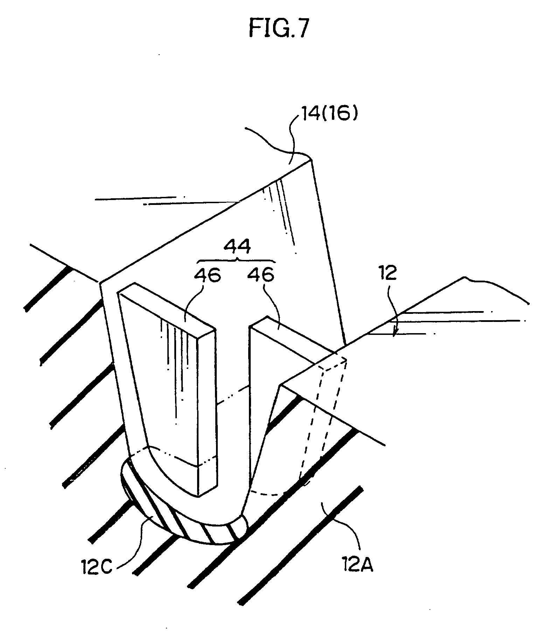

Groove fences 44, such as that shown in Fig. 7, are formed in the circumferential direction main grooves 14 and the circumferential direction main grooves 16.

The groove fences 44 are provided at intervals such that at least one groove fence 44 is disposed in each circumferential direction main groove, within the ground-contact plane formed at the time the tire is running.

The groove fence 44 of the present embodiment is formed by a pair of projections 46 which project toward the groove center from the opposing groove walls. The one projection 46 and the other projection 46 are offset in the circumferential direction of the tire so as not to contact each other at the time of running under load.

The crack suppressing rubber 12C is provided at the groove bottom of the circumferential direction main groove 14.

The crack suppressing rubber 12C is provided so as to be exposed at least at the groove bottom, and preferably has a gauge of 1 mm or more.

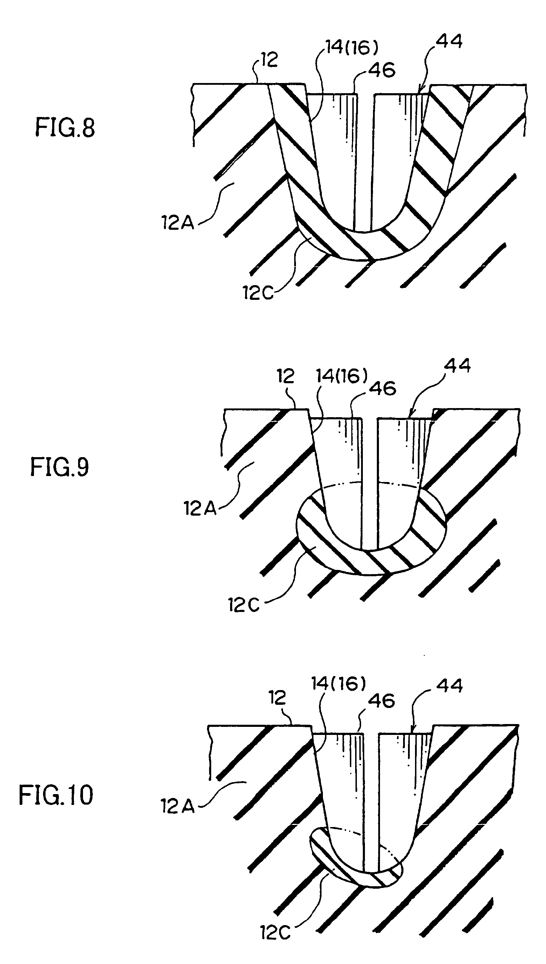

As shown in Fig. 7, the crack suppressing rubber 12C may be provided in at least a vicinity of the groove bottom. Or, as shown in Fig. 8, all of the groove walls and the projections 46 may be made from the crack suppressing rubber 12C. Or, as shown in Figs. 9 and 10, portions of the groove walls and the projections 46 may be made from the crack suppressing rubber 12C.

High frequency vibrations of the groove walls, at the time the tire is rolling, propagate in the air within the grooves and tend to cause columnar resonance of the grooves provided in the tread.

In the pneumatic tire 10 of the present embodiment, because the groove fences 44 are provided in the circumferential direction main grooves 14 and the circumferential direction main grooves 16, columnar resonance can be reduced.

In the pneumatic tire 10 of the present embodiment, although shearing stress tends to concentrate between the projection 46 and the projection 46 of the groove bottom, the generation of cracks due to the concentration of shearing stress can reliably be prevented, because the crack suppressing rubber 12C is disposed at the periphery of the groove bottom.

In order to confirm the effects of the tire of the present invention, a tire of a Conventional Example, and a tire of an Example to which the present invention was applied were prepared, and experiments carried out by running on actual vehicles were performed thereon.

Example Tire: The structure was the same as the structure of the first embodiment. The crack suppressing rubber exhibited an elongation-at-break which was 140% of the elongation-at-break of the cap rubber. The thickness of the crack suppressing rubber was 3 mm (on average), and the height (at the top position) thereof from the groove bottom was 40% of the groove depth (i.e., was 6 mm). In the vicinity of the groove bottom, the thickness of the crack suppressing rubber was 2 mm. The thickness t of the thin-film-form cap rubber reinforcing the crack suppressing rubber was 0.5 mm or less.

Conventional Tire: The conventional tire was a tire having a structure in which no crack suppressing rubber was provided.

In the experiment, the tires (tire size: 295/75R225) were mounted on all of the wheels of actual vehicles, and were run on general roads and highways for 200, 000 km. The tear (break) length of the shoulder ribs of the tires after running was investigated.

**TABLE 1**

| | Conventional example | Example |
|---|---|---|
| Ratio of elongation-at-break Crack suppressing rubber/cap rubber | - | 180% |
| Tears | some | None |

The results of the experiment showed that, in the tires of the Conventional Example, plural tears arose in the shoulder ribs, and the total length, in the circumferential direction, of the tears was 80 mm.

In contrast, there were no tears (breaks) in the shoulder ribs of any of the Example tires.

As described above, in accordance with the tire of the present invention, there are excellent effects that generation of cracks from the groove bottoms of circumferential direction grooves and growth of cracks which are generated are suppressed, and breaking-off of the land portions and separation of the tread can be suppressed.

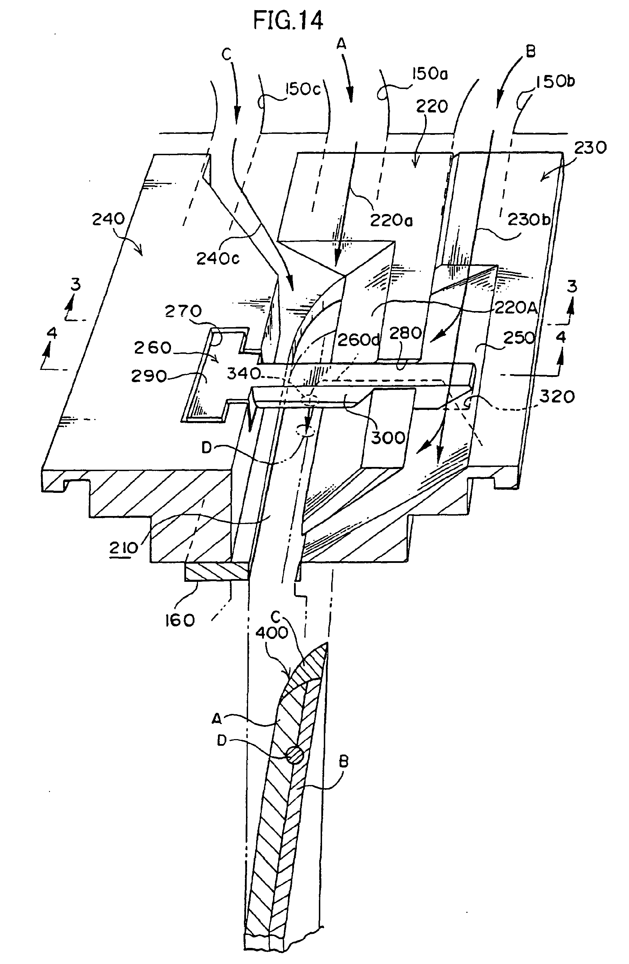

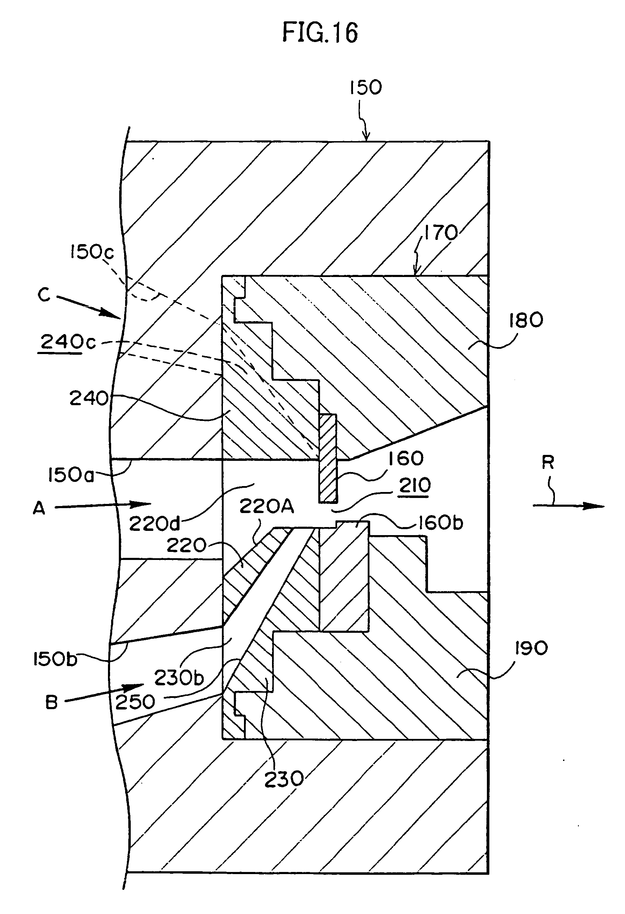

Next, embodiments of a device for extruding an unvulcanized tread rubber for a tire will be described on the basis of Figs. 14 through 20.

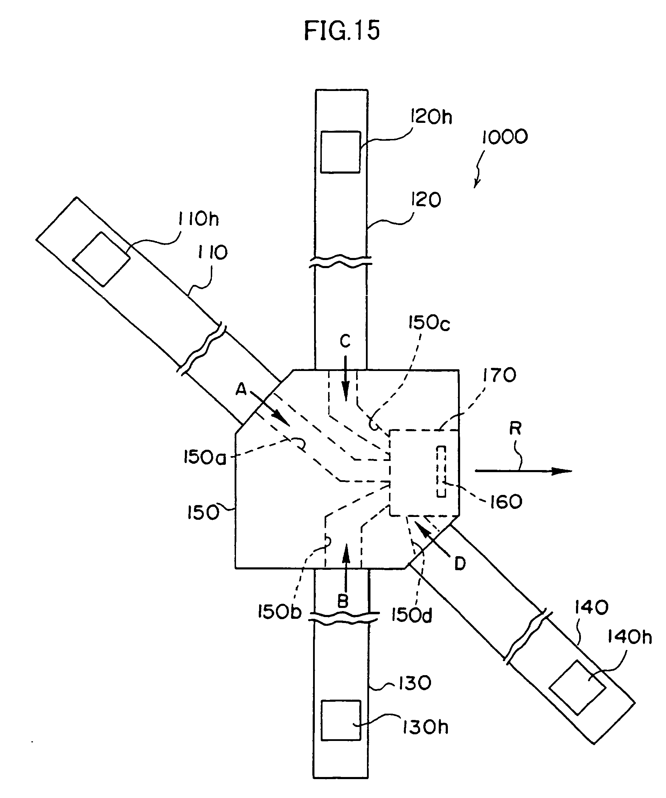

As shown in Fig. 15, a device 1000 for extruding an unvulcanized tread rubber for a tire of the present embodiment has four extruder main bodies 110, 120, 130, 140, and an extrusion head 150 which is connected to the distal end portions of the extruder main bodies 110, 120, 130, 140.

In the present embodiment, the extruder main bodies 110, 120, 130 correspond to the first extruding device main bodies, and the extruder main body 140 corresponds to the second extruding device main body. In this way, a plurality of first extruding device main bodies may be provided.

The extruder main bodies 110, 120, 130, 140 are provided, respectively, with hoppers 110h, 120h, 130h, 140h for supplying unvulcanized rubber, which are positioned at the rear sides of the extruder main bodies 110, 120, 130, 140. Unvulcanized rubbers A, B, C, D, which are four types of unvulcanized rubbers having different blended compositions, are continuously supplied to the extruder main bodies 110, 120, 130, 140 from the hoppers 110h, 120h, 130h, 140h, respectively. At the interiors of the extruder main bodies 110, 120, 130, 140, the unvulcanized rubbers A, B, C, D are guided out toward the extrusion head 150 by screws (not shown) which are driven to rotate.

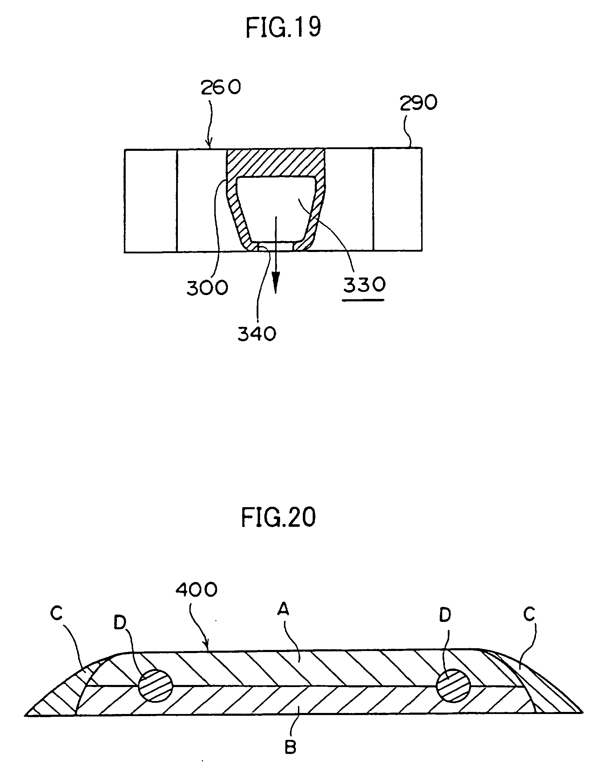

Fig. 20 illustrates the cross-sectional configuration of an integral composite unvulcanized tread rubber 400 which is extrusion molded by the device 1000 for extruding an unvulcanized tread rubber for a tire.

In Fig. 20, the unvulcanized rubber A is the unvulcanized rubber which becomes the cap rubber at the tread of the manufactured product tire. Unvulcanized rubber B is the unvulcanized rubber which becomes the base rubber of the tread. Unvulcanized rubber C is the small pieces of unvulcanized rubber which are called mini-sidewall rubbers which are positioned at the sides of the tread surface side tread rubber of the manufactured product tire, and which are joined to the sidewall rubbers (not shown). Unvulcanized rubber D is the unvulcanized rubber for crack suppression which is disposed in vicinities of groove bottoms of the circumferential direction grooves formed in the tread of the manufactured product tire.

Next, the extrusion head 150 will be described in detail.

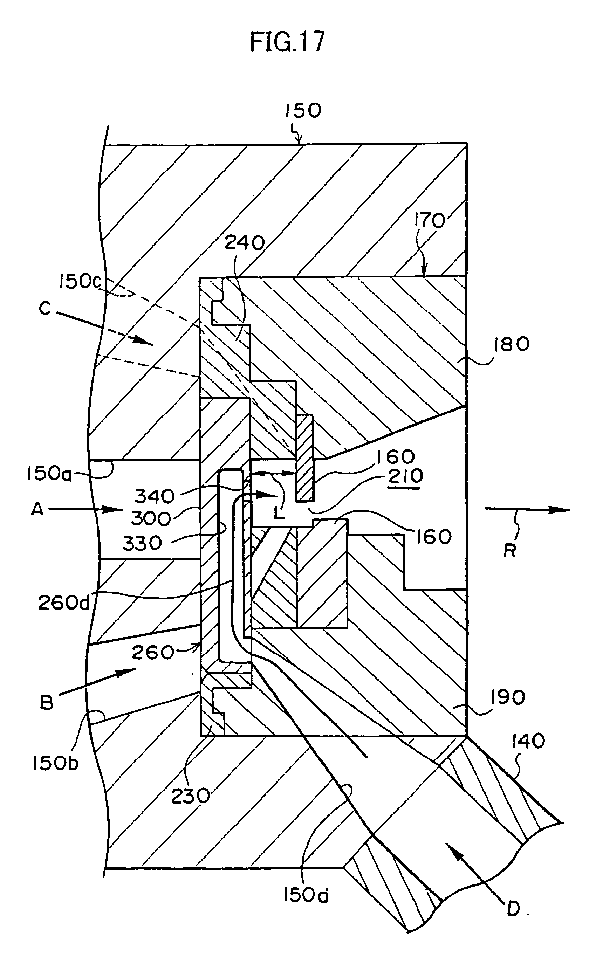

As shown in Fig. 17, the extrusion head 150 is equipped with a mouthpiece 160 which is positioned at the distal end portion of the extrusion head 150 (i.e., the downstream-side end portion of the extrusion head 150 in the direction of extruding the unvulcanized rubbers A, B, C, D) . The extrusion head 150 has flow paths 150a, 150b, 150c, 150d for the unvulcanized rubbers A, B, C, D which are directed toward the mouthpiece 160 from the extrusion outlets of the respective extruder main bodies 110, 120, 130, 140. A forming means 170, which is for forming an integral composite unvulcanized tread rubber 400 in which the unvulcanized rubbers A, B, C, D respectively have predetermined cross-sectional configurations, is accommodated so as to be freely removable, between the terminal ends of the flow paths 150a, 150b, 150c, 150d and the mouthpiece 16.

The unvulcanized rubbers A, B, C, D are extruded in direction R.

As shown in Fig. 17, the forming means 170 has a back die 160b, a die holder 180, and a back die holder 190. The back die 160b forms a pair with the mouthpiece 160, and serves to separately form the bottom portion of the extruded outer contour configuration of the mouthpiece 160. The die holder 180 holds and fixes the mouthpiece 160 to the extrusion head 150. The back die holder 190 holds and fixes the back die 160b to the extrusion head 150.

The forming means 170 has a first flow path forming mold 220 which is disposed between the mouthpiece 160 and the terminal ends of the flow paths 150a, 150b, 150c of the extrusion head 150; a second flow path forming mold 240 and a third flow path forming mold 230 which are provided such that the first flow path forming mold 220 is disposed therebetween; and a fourth flow path forming mold 260 which is provided so as to cross the first flow path forming mold 220.

The first flow path forming mold 220 has a flow path 220a which is directed toward the mouthpiece 160 and which is for the unvulcanized rubber A. The second flow path forming mold 240 has a flow path 240c which is directed toward the mouthpiece 160 and which is for the unvulcanized rubber C. The third flow path forming mold 230 has a flow path 230b which is directed toward the mouthpiece 160 and which is for the unvulcanized rubber B.

Fig. 14 is a perspective view, as seen at an incline from below at the upstream side in the flowing direction of the rubber, of the first flow path forming mold 220, the second flow path forming mold 240, the third flow path forming mold 230, the fourth flow path forming mold 260, and the mouthpiece 160.

As shown in Fig. 14, the first flow path forming mold 220 has the flow path 220a, which is oriented in the direction of the arrow representing the unvulcanized rubber A. The first flow path forming mold 220 has a cut-out concave portion 220A which runs along the flow path 220a, and which opens to both the back surface of the mouthpiece 160 and to a laterally-long space 210 between the mouthpiece 160 and the back die 160b.

The second flow path forming mold 240 has the flow path 240c, which is oriented in the direction of the arrow representing the unvulcanized rubber C. The flow path 240c opens to and connects with the cut-out concave portion 220A of the first flow path forming mold 220.

The third flow path forming mold 230 has the flow path 230b, which is oriented in the direction of the arrow representing the unvulcanized rubber B. The third flow path forming mold 230 has an inclined cut-out concave portion 250 which runs along the flow path 230b and which opens to the back surface of the mouthpiece 160 and to the laterally-long space 210, with the first flow path forming mold 220 serving as a dam thereof.

Further, a T-shaped cut-out portion 270 is formed in the second flow path forming mold 240. A groove 280 is formed in the first flow path forming mold 220.

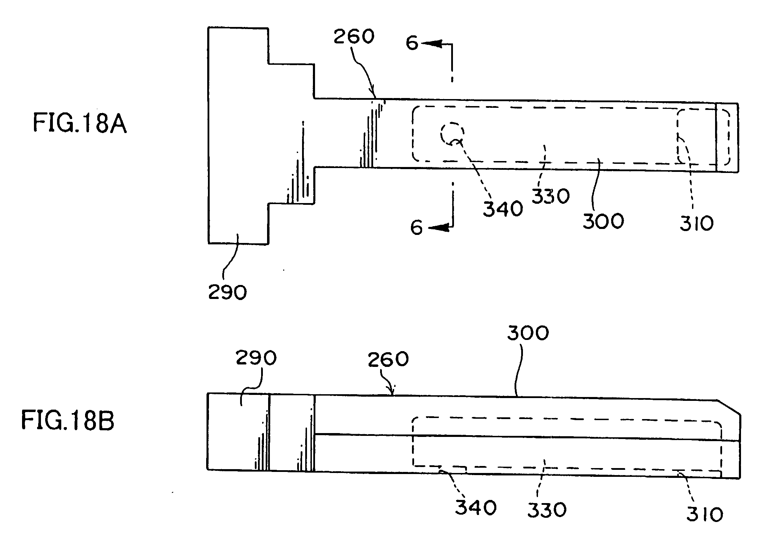

As shown in Figs. 14 and 18, the fourth flow path forming mold 260 has a base portion 290 and a hollow sheath 300. The base portion 290 is removably fit with the T-shaped cut-out portion 270 of the second flow path forming mold 240. The hollow sheath 300, which is long, narrow, and thin, extends from the base portion 290.

The hollow sheath 300 has, at the distal end thereof, an introduction opening 310 for the unvulcanized rubber D. The intermediate portion of the hollow sheath 300 is removably fit in the groove 280 of the first flow path forming mold 220. The introduction opening 310 side portion of the hollow sheath 300 is removably fit in a concave portion 320 formed in the cut-out portion 250 of the third flow path forming mold 230.

As shown in Figs. 14 and 19, the hollow sheath 300 of the fourth flow path forming mold 260 is formed in a taper shape which narrows toward the mouthpiece 160 side.

The hollow sheath 300 has an internal space 330 which receives the unvulcanized rubber D which flows through the introduction opening 310, and has an opening portion 340 at the mouthpiece 160 side.

Accordingly, the fourth flow path forming mold 260 has a flow path 260d, for the unvulcanized rubber D, which extends from the introduction opening 310 through the internal space 330 to the opening portion 340.

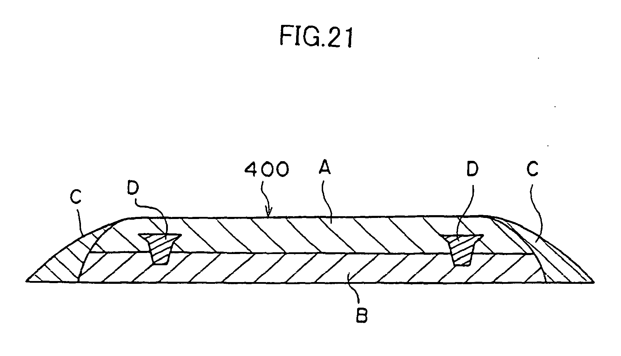

Although the opening portion 340 is circular in the present embodiment, this is not essential. The configuration of the opening portion 340 may be substantially trapezoidal so that the unvulcanized rubber D in the integral composite unvulcanized tread rubber 400 has the cross-sectional configuration shown in Fig. 21 (second embodiment) . In any case, the configuration of the opening portion 340 is substantially the same as the cross-sectional configuration of the extruded unvulcanized rubber D.

The distance (L in Fig. 17) from the opening portion 340 to the mouthpiece 160 is preferably 0 to 50 mm.

Next, operation of the device 1000 for extruding an unvulcanized tread rubber for a tire of the present embodiment will be described.

In the device 1000 for extruding an unvulcanized tread rubber for a tire of the present embodiment, the unvulcanized rubbers A, B, C, D are extruded toward the mouthpiece 160 by the extruder main bodies 110, 120, 130, 140.

Then, the unvulcanized rubber A heads toward the mouthpiece 160 via the flow path 220a, the unvulcanized rubber B heads toward the mouthpiece 160 via the flow path 230b, and the unvulcanized rubber C heads toward the mouthpiece 160 via the flow path 240c.

Here, the unvulcanized rubber D, which has a circular cross-sectional configuration, is discharged into the flow of the unvulcanized rubbers A, B, C from the opening portion 340 which is disposed at the upstream side of the mouthpiece 160 and in the vicinity of the mouthpiece 160. Thus, the integral composite unvulcanized tread rubber 400, which has the cross-sectional configuration shown in Fig. 20, can be continuously extrusion molded.

Note that, in the present embodiment, an example is described in which the integral composite unvulcanized tread rubber 400, which is used in the tread of a cap-base structure, is extrusion molded. However, there may of course be used an extruding device which extrusion molds an integral composite unvulcanized tread rubber for a tread of another structure having a different cross-sectional configuration.

Note that the structure shown in Fig. 21 (the second embodiment) is an example of an integral composite unvulcanized tread rubber having a cross-sectional configuration which is different than the cross-sectional configuration shown in Fig. 20.

As described above, in accordance with the device for extruding an unvulcanized tread rubber for a tire and the method of extruding an unvulcanized tread rubber for a tire, it is possible to effectively extrusion mold an unvulcanized rubber member for a tire, which member is for forming a tread in which the generation of cracks from groove bottoms of circumferential direction grooves and the growth of generated cracks can be reliably suppressed.

## Claims

1. A tire (10) comprising:
a tread (12); and
a plurality of grooves (14, 16, 38) provided in the tread;
**characterized in that**:
at at least one groove of the plurality of grooves, a crack suppressing rubber (12C) having crack resistance which is superior to crack resistance of surrounding rubber is disposed so as to reinforce a vicinity of a groove bottom, the crack resistance being a characteristic of suppressing generation and growth of cracks and is evaluated by elongation-at-break (%) of rubber as stated in the JIS standard vulcanized rubber tensile test method (K6251), and elongation-at-break of the crack suppressing rubber (12C) is 130 % or more of elongation-at-break of a rubber (12A) forming a tread surface of the tread.

2. A tire as claimed in claim 1, **characterized in that** the groove at which the crack suppressing rubber (12C) is disposed is a circumferential direction groove (38) which extends in a circumferential direction and which is disposed at an outermost side in a widthwise direction of the tire.

3. A tire as claimed in claim 1or 2, **characterized in that** the crack suppressing rubber (12C) is provided at 10 % or more of a groove depth dimension (D1), at least from the groove bottom toward an opening portion of the groove.

4. A tire as claimed in any of claims 1to 3, **characterized in that** a thickness(tl) of the crack suppressing rubber (12C) is 1 mm or more.

5. A tire as claimed in claim 4, **characterized in that** the thickness (tl) of the crack suppressing rubber (12C) is greater than or equal to 2 mm and less than or equal to 5 mm.

6. A tire as claimed in any of claims 1 to 5, **characterized by** further comprising a projection (46) which extends from at least one of the groove bottom and a groove wall of the at least one groove (14, 16) toward an inner side of the groove, an end portion of the projection being disposed in the vicinity of the groove bottom.

7. A tire as claimed in claim 6, **characterized in that** the projection is formed by a pair of projections (46) which project toward a center of the groove (14, 16) from both opposing groove walls.

8. A tire as claimed in claim 7, **characterized in that** one projection (46) and another projection (46) are disposed so as to be offset in a circumferential direction of the tire.

9. A tire as claimed in any of claims 1 to 8, **characterized in that** the crack suppressing rubber (12C) is exposed at least at the groove bottom.

## Patentansprüche

1. Reifen (10), aufweisend:
ein Laufflächenband (12); und
eine Vielzahl von Rillen (14, 16, 18), vorgesehen in dem Laufflächenband;
**dadurch gekennzeichnet, dass**:
in mindestens einer Rille der Vielzahl von Rillen ein Riss unterdrückendes Gummi (12C), welches eine Rissfestigkeit größer als die Rissfestigkeit des umgebenden Gummis hat, so angeordnet ist, das eine Nachbarschaft eines Rillengrundes verstärkt wird, wobei die Rissfestigkeit eine Eigenschaft des Unterdrückens der Erzeugung und des Wachstums von Rissen ist und berechnet wird durch die Bruchdehnung (%) von Gummi, wie festgelegt in der JIS-Standard-Zugtestmethode von vulkanisiertem Gummi (K6251), und dass die Bruchdehnung des Riss unterdrückenden Gummis (12C) 130% oder mehr der Bruchdehnung eines eine Lauffläche des Laufflächenbandes bildenden Gummis (12A) ist.

2. Reifen nach Anspruch 1, **dadurch gekennzeichnet, dass** die Rille, in welcher das Riss unterdrückende Gummi (12C) angeordnet ist, eine Rille (38) in Umfangsrichtung ist, welche sich in Umfangsrichtung erstreckt und welche an einer äußersten Seite in einer Breitenrichtung des Reifens angeordnet ist.

3. Reifen nach Anspruch 1 oder 2, **dadurch gekennzeichnet, dass** das Riss unterdrückende Gummi (12C) in 10% oder mehr einer Rillentiefenabmessungen (D1) vorgesehen ist, mindestens vom Rillengrund bis zu einem Öffnungsabschnitt der Rille.

4. Reifen nach einem der Ansprüche 1 bis 3, **dadurch gekennzeichnet, dass** die Dicke (t1) des Riss unterdrückenden Gummis (12C) 1 mm oder mehr ist.

5. Reifen nach Anspruch 4, **dadurch gekennzeichnet, dass** die Dicke (t1) des Riss unterdrückenden Gummis (12C) größer oder gleich 2 mm und weniger oder gleich 5 mm ist.

6. Reifen nach einem der Ansprüche 1 bis 5, weiter **gekennzeichnet durch** einen Vorsprung (46), welcher sich von dem Rillengrund und/oder einer Rillenwand der mindestens einen Rille (14, 16) zu einer inneren Seite der Rille erstreckt, wobei ein Endabschnitt des Vorsprungs in der Nähe des Rillengrundes angeordnet ist.

7. Reifen nach Anspruch 6, **dadurch gekennzeichnet, dass** der Vorsprung von einem Paar von Vorsprüngen (46) gebildet ist, welche von beiden gegenüberliegenden Rillenwänden zu einem Zentrum der Rille (14, 16) vorspringen.

8. Reifen nach Anspruch 7, **dadurch gekennzeichnet, dass** ein Vorsprung (46) und ein anderer Vorsprung (46) so angeordnet sind, dass sie in einer Umfangsrichtung des Reifens versetzt sind.

9. Reifen nach einem der Ansprüche 1 bis 8, **dadurch gekennzeichnet, dass** das Riss unterdrückende Gummi (12C) mindestens im Rillengrund exponiert ist.

## Revendications

1. Pneu (10) comprenant :
une bande de roulement (12); et
une pluralité de rainures (14, 16, 38) prévue dans la bande de roulement ;
**caractérisé en ce que** :
dans au moins une rainures de la pluralité de rainures, un caoutchouc anti-fissure (12C) ayant une résistance à la fissuration qui est supérieure à la résistance à la fissuration du caoutchouc environnant est disposé de manière à renforcer un voisinage d'un fond de rainure, la résistance à la fissuration étant une caractéristique de suppression de génération et de croissance des fissures et est évaluée par l'allongement à la rupture (%) du caoutchouc comme établi dans le procédé d'essai de traction de caoutchouc vulcanisé standard JIS (K6251), et l'allongement à la rupture du caoutchouc anti-fissure (12C) est de 130 % ou plus de l'allongement à la rupture d'un caoutchouc (12A) formant une surface de roulement de la bande de roulement.

2. Pneu selon la revendication 1, **caractérisé en ce que** la rainure dans laquelle le caoutchouc anti-fissure (12C) est disposé, est une rainure de direction circonférentielle (38) qui s'étend dans une direction circonférentielle et qui est disposée d'un côté le plus à l'extérieur dans une direction en largeur du bandage pneumatique.

3. Pneu selon la revendication 1 ou 2, **caractérisé en ce que** le caoutchouc anti-fissure (12C) est muni à 10 % ou plus d'une dimension de profondeur de rainure (D1), au moins à partir du fond de rainure vers une partie d'ouverture de la rainure.

4. Pneu selon l'une quelconque des revendications 1 à 3, **caractérisé en ce qu'**une épaisseur (t1) du caoutchouc anti-fissure (12C) est de 1 mm ou plus.

5. Pneu selon la revendication 4, **caractérisé en ce que** l'épaisseur (tl) du caoutchouc anti-fissure (12C) est supérieure ou égale à 2 mm et inférieure ou égale à 5 mm.

6. Pneu selon l'une quelconque des revendications 1 à 5, **caractérisé en ce qu'**il comprend en outre une saillie (46) qui s'étend à partir d'au moins l'un du fond de rainure et d'une paroi de rainure de l'au moins une rainure (14, 16) vers un côté intérieur de la rainure, et une partie d'extrémité de la saillie étant disposée dans le voisinage du fond de rainure.

7. Pneu selon la revendication 6, **caractérisé en ce que** la saillie est formée par une paire de saillies (46) qui font saillie vers un centre de la rainure (14, 16) à partir des deux parois de rainure opposées.

8. Pneu selon la revendication 7, **caractérisé en ce qu'**une saillie (46) et une autre saillie (46) sont disposées de manière à être décalées dans une direction circonférentielle du pneu.

9. Pneu selon l'une quelconque des revendications 1 à 8, **caractérisé en ce que** le caoutchouc anti-fissure (12C) est exposé au moins au fond de rainure.
